# EUROPEAN PATENT SPECIFICATION

(11) **EP 3 996 171 B1**
(45) Date of publication and mention of the grant of the patent: **20.11.2024**
(21) Application number: 20835227.8
(22) Date of filing: 30.06.2020
(51) Int. Cl.: H01M 4/36, C01G 53/00

(54) **W-CONTAINING HIGH-NICKEL TERNARY POSITIVE ELECTRODE MATERIAL AND PREPARATION METHOD THEREFOR**
W ENTHALTENDES TERNÄRES POSITIVELEKTRODENMATERIAL MIT HOHEM NICKELGEHALT UND VERFAHREN ZU SEINER HERSTELLUNG
MATÉRIAU D'ÉLECTRODE POSITIVE TERNAIRE À HAUTE TENEUR EN NICKEL CONTENANT DU TUNGSTÈNE ET SON PROCÉDÉ DE PRÉPARATION

(30) Priority: 02.07.2019 CN 201910590785
(43) Date of publication of application: 11.05.2022
(73) Proprietor: BASF Shanshan Battery Materials (Ningxiang) Co., Ltd., Changsha, Hunan 410600 (CN)
(72) Inventor: KE, Changxuan, Hunan 410600 (CN); ZHAO, Xuemin, Hunan 410600 (CN); LI, Mengyuan, Hunan 410600 (CN); HE, Yulei, Hunan 410600 (CN); TAN, Xinxin, Hunan 410600 (CN); LI, Xu, Hunan 410600 (CN)
(74) Representative: Chung, Hoi Kan
(86) International application number: PCT/CN2020/099418
(87) International publication number: WO 2021/000868

(56) References cited:
- CN-A- 103 811 744
- CN-A- 106 486 665
- CN-A- 109 524 642
- CN-A- 109 680 333
- CN-A- 109 888 235
- CN-A- 109 888 235
- JP-A- 2014 049 407
- US-A1- 2016 172 672

## Description

### CROSS-REFERENCE TO RELATED APPLICATIONS

The application claims priority to Chinese patent application No. 2019105907855, filed on July 2, 2019.

### TECHNICAL FIELD

The present disclosure belongs to the technical field of lithium-ion batteries (LIBs), and in particular relates to a high-nickel ternary cathode material and a preparation method thereof.

### BACKGROUND

With the development of new energy vehicles, the requirements for mileage continue to increase. Therefore, for lithium battery cathode materials, it is one of the research interests to develop high-nickel materials. High-nickel cathode materials have a very significant capacity advantage, with an actual capacity of about 200 mAh/g. In addition, high-nickel materials have a price advantage due to the use of less Co. Although there is currently no large-scale application in the field of power battery energy storage due to constraints such as stability and cycling performance, with the continuous development of new doping-coating techniques and precursor techniques, these drawbacks are gradually compensated.

There are currently two development directions for high-nickel cathode materials. High-nickel cathode materials are mainly distinguished from the morphology, including spherical secondary particles and single-crystal panicles. At present, there are relatively mature preparation methods for materials of the two morphologies. Chinese patent CN109244436 introduces a preparation method of a high-nickel secondary particle material to prepare a high-nickel cathode material with a spherical secondary particle morphology. Due to the constraints of poor high-temperature cycling, rapid high-temperature DC internal resistance (DCR) growth, gas production, and other factors, secondary particle materials are more likely to be used in the field of energy storage, and less likely to be used in the field of power. Chinese patent CN107768619 introduces a preparation method of a high-nickel single-crystal material to prepare a high-nickel cathode material with a single-crystal morphology. Single-crystal material have large advantages in gas production, cycling, and the like, but have low capacity, which reduces the advantage of high-nickel materials to bring high endurance power for electric vehicles. The high-nickel cathode materials of the two morphologies each have respective shortcomings, which has become the main technical bottleneck. Another Chinese patent, CN109888235A introduces a cathode material for a lithium ion battery, in particular to a graded high nickel ternary cathode material and a preparation method and application thereof. The modified ternary polycrystalline and single crystal grading material is produced by mixing a high nickel polycrystalline material and a ternary single crystal material and performing surface coating treatment by re-sintering.

The above-mentioned materials of the two morphologies have been used in combination (as shown in Chinese patent CN103811744), but a combined product does not include W. The cathode materials of the two morphologies are directly mixed usually through physical blending to obtain a high-nickel cathode material with both spherical and single-crystal morphologies. Due to the different preparation processes of the materials of the two morphologies, such as different preparation conditions, sintering temperatures, doping materials, and coating materials, the materials of the two morphologies have quite different basic cell parameters, and this difference requires the use of different battery systems to adjust. Therefore, simple physical blending has significant drawbacks. Simple physical blending cannot effectively improve the capacity and cycling performance of the material; cannot overcome the disadvantages of gas production, rapid internal resistance growth, and the like; and cannot better match a battery system, but can simply increase the compacted density. Therefore, simple physical blending cannot substantially solve the problems of existing high-nickel materials, and may even backfire.

### SUMMARY

The technical problem to be solved by the present disclosure is to overcome the shortcomings and deficiencies mentioned in the background art and provide a W-containing high-nickel ternary cathode material in which spherical secondary particles and single-crystal particles coexist. Moreover, the present disclosure also provides a preparation method of the high-nickel cathode material, where through the control on precursors and sintering conditions, one-time sintering is conducted to obtain the high-nickel cathode material with both single-crystal particles and spherical secondary particles.

In order to solve the above technical problems, the present disclosure adopts the following technical solutions: A W-containing high-nickel ternary cathode material is provided, with a chemical formula of LiₐNiₓCo_{y}Mn_{1-x-y}W_{b}M_{c}O₂, where the high-nickel ternary cathode material includes both spherical secondary particles and single-crystal particles; there is basically no W inside the single-crystal particles (if there is W inside the single-crystal particles, single-crystal particles are difficult to exist and are easy to grow into secondary spheres); and the spherical secondary particles are doped with W (because a precursor is doped with W and W restricts the growth of primary particles and promotes the generation of secondary spheres, the spherical secondary particles necessarily include W).

For the high-nickel ternary cathode material, preferably, the spherical secondary particles may have a particle size of 2.4 µm to 5.5 µm; and the single-crystal particles may have a particle size of 1.0 µm to 5.5 µm. Preferably, the high-nickel ternary cathode material may have a median diameter of 3.0 µm to 5.5 µm. In the present disclosure, particles with small D50 are adopted to maximize the capacity; W is doped to form a W coating layer through process control in a later stage, which is favorable for the cycling; and single-crystal particles are also introduced, which is also beneficial to the improvement of cycling performance. Therefore, the present disclosure can achieve an improvement in overall performance through the comprehensive regulation of particle size and particle structure.

For the high-nickel ternary cathode material, preferably, a mass ratio of the spherical secondary particles to the single-crystal particles in the high-nickel ternary cathode material may be determined by a ratio of a W-containing precursor B to a W-free precursor A in a raw material. In the present disclosure, the ratio of the W-containing precursor B to the W-free precursor A can be controlled to finally control the ratio of the spherical secondary particles to the single-crystal particles in the high-nickel ternary cathode material. The ratio of the two precursors is the ratio of spherical secondary particles to single-crystal particles in a product obtained after the sintering. By accurately controlling the ratio of the two morphologies, a high-nickel cathode material with ideal morphology and performance can be obtained. More preferably, a mass ratio of the precursor B to the precursor A may be (0.05-19): 1. Most preferably, a mass ratio of the precursor B to the precursor A may be (0.4-1.5): 1, in which case, an obtained high-nickel cathode material has the optimal capacity and cycling performance.

For the high-nickel ternary cathode material, preferably, a surface of the high-nickel ternary cathode material may be at least partly or completely coated with a lithium tungstate layer. The lithium tungstate layer is preferably formed from W inside the spherical secondary particles during a high-temperature sintering process, where one part of the W forms a lithium tungstate coating layer on the surface of the spherical secondary particles, and one part of the W forms a lithium tungstate coating layer on the surface of nearby single-crystal particles.

For the high-nickel ternary cathode material, preferably, in the molecular formula of LiₐNiₓCo_{y}Mn_{1-x-y}W_{b}M_{c}O₂, 1.00 ≤ a ≤ 1.16, 0.7 < x < 1, 0 < y < 0.3, 0.002 < b+c < 0.01, and the M may be one or more from the group consisting of Zr, Mg, Ti, Al, Si, La, Ba, Sr, Nb, Cr, Mo, Ca, Y, In, Sn, and F; and the high-nickel ternary cathode material may have a specific surface area (SSA) of 0.8 ± 0.3 m²/g.

For the high-nickel ternary cathode material, preferably, on the premise of ignoring element loss during a preparation process, a Ni-Co-Mn molar ratio in the spherical secondary particles may be consistent with a Ni-Co-Mn molar ratio in the single-crystal particles. In the prior art, even if there are some public mentions of spherical secondary particles and single-crystal particles, the two particles may have different Ni mass fractions or atomic proportions, which makes the two particles fail to be well matched in a battery system. However, the two different microscopic particles of the present disclosure have basically the same nickel content, such that the two particles can well coexist in a battery system.

As a general technical idea, the present disclosure also provides a preparation method of the high-nickel ternary cathode material, including the following steps:
(1) mixing and dissolving a soluble nickel salt, a soluble cobalt salt, and a soluble manganese salt in deionized water according to a nickel-cobalt-manganese molar ratio in a molecular formula of the product, continuously stirring a resulting solution in a reactor, and adding an ammonia solution and a sodium hydroxide solution for co-precipitation to prepare a precursor A;
(2) mixing and dissolving a soluble nickel salt, a soluble cobalt salt, and a soluble manganese salt in deionized water according to a nickel-cobalt-manganese molar ratio in the molecular formula of the product, adding a soluble tungsten salt, and after the tungsten salt is completely dissolved, transferring a resulting solution to a reactor; and continuously stirring the solution, and adding an ammonia solution and a sodium hydroxide solution for co-precipitation to prepare a W-containing precursor B; and
(3) thoroughly mixing the precursor A, the precursor B, a lithium source, and a doping element M-containing compound, subjecting a resulting mixed material to high-temperature sintering (a temperature at which a single crystal with a perfect crystal form is generated, at this temperature, the effect of controlling a particle size of precursor particles through temperature to generate single-crystal particles and spherical secondary particles can be ignored.) in an oxygen atmosphere, and crushing a sintered material to a median diameter of 3.0 µm to 5.5 µm to obtain the W-containing high-nickel ternary cathode material, which has a molecular formula of LiₐNiₓCo_{y}Mn_{1-x-y}W_{b}M_{c}O₂ and includes both spherical secondary particles and single-crystal particles.

In existing methods, W is rarely used to control a particle size when spherical secondary particles or single-crystal particles are prepared, and a particle size of primary particles is controlled mainly by adjusting a sintering temperature. In the above preparation method, the precursor A and the precursor B are separately obtained in the precursor preparation stage. W in the W-containing precursor B has a large ionic radius, which can inhibit the fusion growth of single-crystal particles to some extent, and thus the precursor B can react with the lithium source to form spherical secondary particles with small primary particles and perfect crystal form during the high-temperature sintering process. The W-free precursor A can react with the lithium source and normally grow into single-crystal particles under high-temperature sintering. In the W-containing high-nickel ternary cathode material prepared by this process, the single-crystal particles have large primary particles, resulting in prominent cycling performance; and the spherical secondary particles have a similar particle size to the single-crystal particles, and are small-particle secondary spheres, resulting in high capacity. On the whole, the material of the present disclosure maintains the dominant position in cycling performance, capacity, and compacted density. In the preparation method of the present disclosure, during the high-temperature sintering, a sintering temperature for preparing a single crystal is adopted (a temperature for generating a single crystal with a perfect crystal form). Because W is doped, small secondary spheres can be formed from agglomeration of small primary particles. One precursor is doped with W and the other precursor is not doped with W, such that particles of the two morphologies can be generated through one-time sintering, and the particles of the two morphologies show excellent and complementary performance.

For the preparation method, preferably, in step (2), the soluble tungsten salt may include one or more from the group consisting of ammonium metatungstate (AMT), phosphotungstic acid (PTA), sodium tungstate, and ammonium paratungstate (APT); and
a molar ratio of tungsten in the soluble tungsten salt to a sum of nickel, cobalt, and manganese in the precursor B may be (0.00025-0.00550): 1.

For the preparation method, preferably, in step (3), the lithium source may be one or more from the group consisting of lithium carbonate, lithium hydroxide, lithium acetate, and lithium oxalate; and
a molar ratio of lithium in the lithium source to a sum of main metal elements in the precursor B, the precursor A, and the doping element M-containing compound may be (0.95-1.1): 1.

For the preparation method, preferably, in step (3), the doping element M-containing compound may be one or more from the group consisting of a hydroxide, a phosphate, a hydrophosphate, an oxide, and an anhydride of the M element. More preferably, the doping element M-containing compound may be an oxide of the M element, and the oxide of the M element may be at least one from the group consisting of ZrO₂, MgO, TiO₂, Al₂O₃, SiO₂, La₂O₃, BaO, SrO, NbzOs, Cr₂O₃, MoO₃, CaO, Y₂O₃, In₂O₃, and SnO₂.

For the preparation method, preferably, in step (3), the mixing may be conducted for 20 min to 50 min by stirring at 2,000 r/min to 4,000 r/min.

For the preparation method, preferably, in step (3), the high-temperature sintering may be conducted at 750°C to 980°C. A sintering temperature for spherical secondary particles is generally lower than that for single-crystal particles in the art, especially in the field of high-nickel cathode materials. In the present disclosure, the precursor B is doped with W and thus can still form spherical secondary particles at a high temperature, which is not limited by the low generation temperature of spherical secondary particles. As the metal element M is doped, the high-temperature sintering at 750°C to 980°C can be adopted, which can make metal ions stably occupy nickel, cobalt, and manganese sites in the lithium-nickel-manganese-cobalt oxide (LNMCO) material with the two morphologies, thereby achieving a prominent doping modification effect.

For the preparation method, preferably, in step (3), the sintering may be conducted for 8 h to 18 h at an oxygen flow rate of 20 L/min to 60 L/min. In the process of sintering the precursors and the lithium source into the cathode material in the present disclosure, the sintering time and the oxygen flow rate can be controlled to make W ions in the W-doped precursor B diffuse from inside to outside of the particles, and the uniformly diffusing W can inhibit the fusion and growth of particles. Part of the W ions diffuse to the surface of the W-free precursor A during the sintering process. Due to a large radius, the W ions cannot diffuse into the interior of the W-free precursor, and thus do not show an inhibitory effect on the growth of the W-free precursor. Therefore, a uniform and stable lithium tungstate coating layer can be formed on the surface of the W-free precursor, which helps to further improve the cycling performance of the material.

For the preparation method, preferably, in step (3), the high-temperature sintering may be conducted once. The two precursors are first mixed and then subjected to one-time sintering at a specified temperature to form the cathode material with two morphologies. The same sintering conditions and atmosphere can ensure that cell parameters of the particles of the two morphologies are consistent as much as possible (the spherical secondary particles are also obtained by high-temperature sintering, and thus have a perfect crystal form), and result in low process cost and high process stability.

Generally, compared with the prior art, the present disclosure and the preferred technical solutions mainly have the following advantages:
1. By controlling the kinetics in chemical reactions, the present disclosure prepares a new W-containing high-nickel cathode material with both spherical secondary particles and single-crystal particles through one-time sintering. The sintering is conducted under the same temperature, atmospheric conditions, dry doping elements, and the like, which can ensure the co-existence of particles of the two morphologies in the prepared material, and make the particles of the two morphologies have the same crystal structure and lattice parameters to the maximum extent. Moreover, spherical secondary particles formed under the high-temperature sintering are more perfect than ordinary secondary spherulites.
2. The spherical secondary particles formed under the high-temperature sintering of the present disclosure have a stable crystal structure. While increasing the capacity, the spherical secondary particles can ensure that a crystal structure will not undergo obvious phase transition when lithium ions are deintercalated during a cycling process, which helps to improve the cycling performance.
3. The high-nickel cathode material prepared by the present disclosure has the advantages of both a high-nickel spherical secondary particle material and a high-nickel single-crystal particle material, where spherical secondary particles and single-crystal particles are uniformly distributed and show prominent fluidity. The combination of spherical secondary particles and single-crystal particles enables a high compacted density. Due to the presence of single-crystal particles, pH and residual Li are reduced, which leads to low gas production and excellent performance for full batteries. Moreover, the presence of single-crystal particles leads to excellent room-temperature and high-temperature cycling performance. Due to the presence of spherical secondary particles, the capacity is significantly improved. Tungsten with a large ionic radius increases a c value among the lattice parameters, accelerates a deintercalation rate of Li ions, and allows the material to have excellent rate performance.
4. A lithium tungstate coating layer is formed on the surface of the high-nickel ternary cathode material of the present disclosure under preferred conditions, which helps to further improve the electrochemical performance. The preparation process of the present disclosure can realize the formation of a coating layer through one-time sintering, which omits the subsequent coating process.
5. The preparation method of the present disclosure is simple, easy to implement, highly controllable, and cost-effective, which can achieve the preparation of a high-nickel cathode material with both spherical secondary particles and single-crystal particles through one-time sintering. Moreover, a ratio of particles of the two morphologies in the material can be controlled.

### BRIEF DESCRIPTION OF THE DRAWINGS

To describe the technical solutions in examples of the present disclosure or in the prior art more clearly, the accompanying drawings required for describing the examples or the prior art will be briefly described below. Apparently, the accompanying drawings in the following description show some examples of the present disclosure, and a person of ordinary skill in the art may still derive other drawings from these accompanying drawings without creative efforts.
FIG. 1 is a scanning electron microscopy (SEM) image of the high-nickel ternary cathode material prepared in Example 1 of the present disclosure;
FIG. 2 shows the particle size distribution of the high-nickel ternary cathode material prepared in Example 1 of the present disclosure;
FIG. 3 is an energy dispersive spectroscopy (EDS) spectrum of the W element on a selected area of the surface of single-crystal particles in the high-nickel ternary cathode material obtained in Example 1 of the present disclosure;
FIG. 4 is a Rietveld refined X-ray diffraction (XRD) pattern of the high-nickel ternary cathode material prepared in Example 1 of the present disclosure;
FIG. 5 is an SEM image of the spherical-secondary-particle high-nickel ternary cathode material prepared in Comparative Example 1;
FIG. 6 shows the comparison of pH titration curves of the high-nickel ternary cathode material prepared in Example 1 and the high-nickel ternary cathode material prepared in Comparative Example 1 of the present disclosure;
FIG. 7 is an SEM image of the single-crystal-particle high-nickel ternary cathode material prepared in Comparative Example 2;
FIG. 8 is an SEM image of the single-crystal-particle high-nickel ternary cathode material prepared in Comparative Example 3;
FIG. 9 is an EDS spectrum of the W element on a selected area of the surface of single-crystal particles in the high-nickel ternary cathode material prepared through physical blending in Comparative Example 4;
FIG. 10 is a particle size distribution diagram obtained from the SEM image of Comparative Example 1 according to a legend scale;
FIG. 11 is a particle size distribution diagram obtained from the SEM image of Comparative Example 2 according to a legend scale; and
FIG. 12 is a Rietveld refined XRD pattern of the high-nickel ternary cathode material prepared in Example 2 of the present disclosure.

### DETAILED DESCRIPTION OF THE EMBODIMENTS

In order to facilitate the understanding of the present disclosure, the present disclosure is described in detail below in conjunction with the accompanying drawings of the specification and the preferred examples, but the protection scope of the present disclosure is not limited to the following specific examples.

Unless otherwise defined, all technical terms used hereinafter have the same meaning as commonly understood by those skilled in the art. The technical terms used herein are merely for the purpose of describing specific examples, and are not intended to limit the protection scope of the present disclosure.

Unless otherwise specified, various raw materials, reagents, instruments, equipment, and the like used in the present disclosure can be purchased from the market or can be prepared by existing methods.

### Example 1:

A W-containing high-nickel ternary cathode material of the present disclosure was provided, with a chemical formula of Li_{1.0068}Ni_{0.8}Co_{0.1}Mn_{0.1}W_{0.0008}Al_{0.006}O₂. The high-nickel ternary cathode material included both spherical secondary particles and single-crystal particles, where there was basically no W inside the single-crystal particles and the spherical secondary particles were doped with W; and the high-nickel ternary cathode material had a median diameter of 4.5 µm and an SSA of 0.68 m²/g.

A preparation method of the W-containing high-nickel ternary cathode material in this example was as follows:
(1) A mixed solution of 0.8 mol/L nickel sulfate, 0.1 mol/L cobalt sulfate, and 0.1 mol/L manganese sulfate was prepared according to a Ni-Co-Mn molar ratio of 0.8:0.1:0.1; a 3 mol/L sodium hydroxide solution and a 1 mol/L ammonia solution were prepared; a pH of the mixed solution was controlled at 11.6 using the sodium hydroxide solution and the ammonia solution (with an ammonia value of 3 g/L), and then the mixed solution was continuously stirred at a rotational speed of 800 rpm and fed into a reactor at a flow rate of 80 ml/min, during which a pH of the reaction system was controlled at 11.6 (with an ammonia value of 3 g/L) by the sodium hydroxide solution and the ammonia solution, a median particle size was controlled at 3.8 µm during crystallization, and the flow rate was controlled through cocurrent flow; and an obtained precursor was washed, centrifuged, and dried to obtain a precursor A.
(2) A mixed solution of 0.8 mol/L nickel sulfate, 0.1 mol/L cobalt sulfate, and 0.1 mol/L manganese sulfate was prepared according to a Ni-Co-Mn molar ratio of 0.8:0.1:0.1, and then AMT was added to the mixed solution, where a molar ratio of tungsten to a sum of nickel, cobalt, and manganese in the mixed solution was 0.0008:1 and W had a concentration of 0.004 mol/L in the mixed solution; a 3 mol/L sodium hydroxide solution and a 1 mol/L ammonia solution were prepared; a pH of the mixed solution was controlled at 11.6 using the sodium hydroxide solution and the ammonia solution (with an ammonia value of 3 g/L), and then the mixed solution was continuously stirred at a rotational speed of 800 rpm and fed into a reactor at a flow rate of 80 ml/min, during which a pH of the system was controlled at 11.6 (with an ammonia value of 3 g/L) by the sodium hydroxide solution and the ammonia solution, a median particle size was controlled at 3.8 µm during crystallization, and the flow rate was controlled through cocurrent flow; and an obtained precursor was washed, centrifuged, and dried to obtain a W-doped precursor B.
(3) The precursor B, the precursor A, LiOH, and Al₂O₃ were mixed, and a resulting mixed material was stirred for 25 min at a speed of 3,000 r/min, where a mass ratio of the precursor B to the precursor A was 1:4, a molar ratio of Al to a sum of Ni, Co, and Mn in a theoretical cathode material was 0.6%, and a molar ratio of Li to other main metal elements was about 1:1; the mixed material was subjected to one-time high-temperature sintering for 10 h at a temperature of 890°C and an oxygen flow rate of 40 L/min in an oxygen furnace; and after the sintering was completed, a sintering product was naturally cooled under the protection of an oxygen atmosphere, then taken out from the furnace, and crushed with a crusher in a constant-temperature and constant-humidity environment to a particle size of 4.5 µm to obtain the high-nickel ternary cathode material Li_{1.0068}Ni_{0.8}Co_{0.1}Mn_{0.1}W_{0.0008}Al_{0.006}O₂ in which a theoretical mass ratio of spherical secondary particles to single-crystal particles was 1:4.

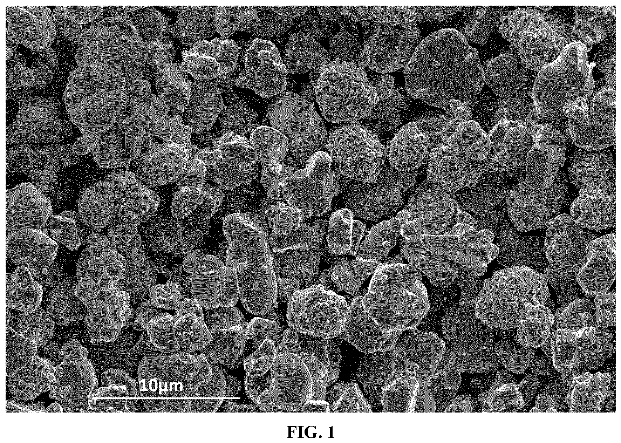

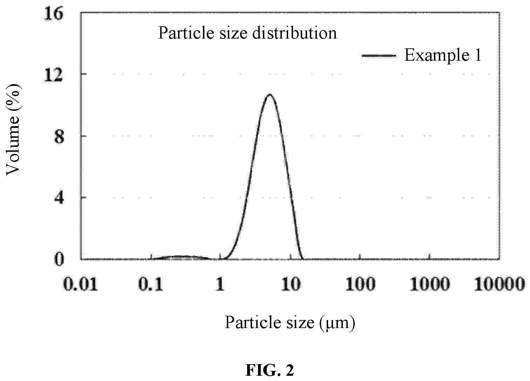

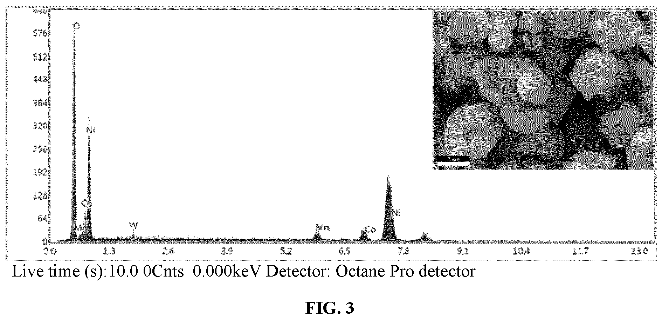

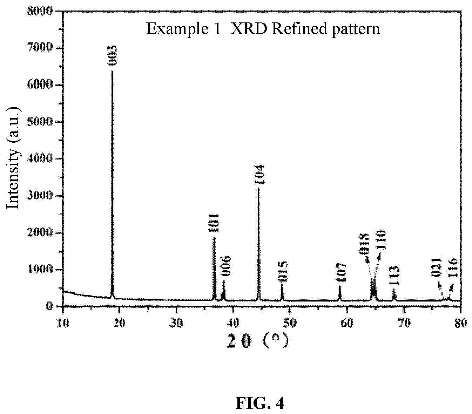

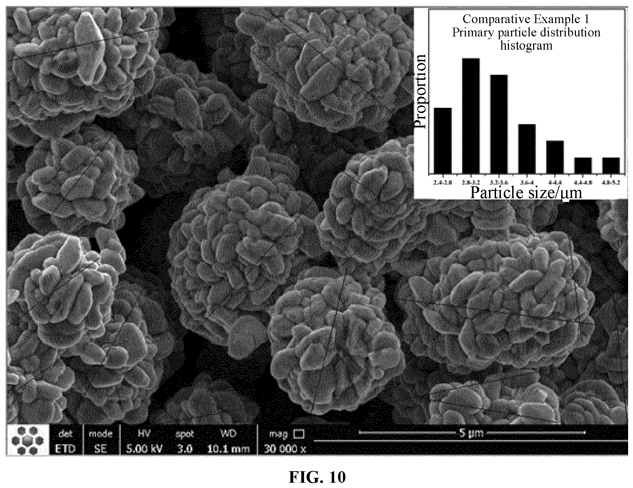

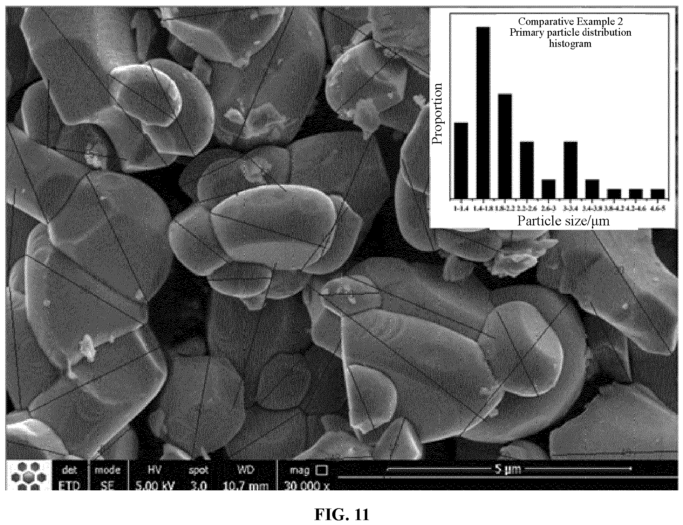

The product prepared in Example 1 was subjected to field emission-scanning electron microscopy (FE-SEM), and a resulting image in FIG. 1 showed that, in the high-nickel cathode material prepared in this example, there were both spherical secondary particles and single-crystal particles, and the spherical secondary particles had uniform sphericity and were uniformly distributed. A mass ratio of the spherical secondary particles to the single-crystal particles in the high-nickel ternary cathode material was adjusted by adjusting a ratio of the W-containing precursor B to the W-free precursor A in the raw material, and was about 1:4. A powder of the cathode material had a compacted density of 3.58 g/cm³, a median particle size of 4.5 µm (as shown in FIG. 2), an SSA of 0.68 m²/g, and a pH of 11.0. The spherical secondary particles had a particle size range of 2.4 µm to 5.5 µm (as shown in FIG. 10), and the single-crystal particles had a particle size range of 1.0 µm to 5.5 µm (as shown in FIG. 11). Through the EDS analysis shown in FIG. 3 in combination with the subsequent test of comparative examples, it can be seen that W was mainly distributed in the spherical secondary particles (which was not only internally doped, but also coated on the surface of the spherical secondary particles); and for the single-crystal particles, only the surface was covered with a W-containing coating layer, and there was almost no W inside, indicating that the W was only distributed on the surface. According to Gibbs free energy, lithium tungstate was easily formed, and thus a lithium tungstate layer was preferentially formed on a surface with W and Li. Al was uniformly distributed on the surface of single-crystal and spherical secondary particles, resulting in uniform doping. The Rietveld refinement was conducted on XRD data, and a resulting pattern was shown in FIG. 4, with a c value of 14.1966 and an a value of 2.8727. The c value and the c/a value were both significantly increased, indicating that W effectively increased the c value. On the premise of ignoring element loss during the preparation process, a Ni-Co-Mn molar ratio in the spherical secondary particles was consistent with a Ni-Co-Mn molar ratio in the single-crystal particles, and the particles of the two morphologies had the same crystal structure and lattice parameters.

The high-nickel ternary cathode material with two morphologies prepared in this example was made into a coin-type cell with a lithium sheet as a negative electrode for evaluation test:
(1) The coin-type cell was charged at 0.1 C and 25°C in a voltage range of 3.0 V to 4.3 V, and a capacity of 205 mAh/g was obtained; then the coin-type cell was discharged at 0.2 C/0.5 C/1.0 C/2.0 C, and results showed that a discharge capacity retention rate was 93.2% at 2.0 C/0.2 C; and 60 cycles were further conducted at 1 C, and a capacity retention rate was 98.6%. It indicates that the high-nickel cathode material with two morphologies can effectively improve the capacity, cycling performance, and rate performance. (2) 60 cycles were conducted at 50°C in a voltage range of 3.0 V to 4.3 V, and a capacity retention rate was 97.3%. It indicates that the high-nickel ternary cathode material with two morphologies has excellent high-temperature cycling performance.

### Example 2:

A W-containing high-nickel ternary cathode material of the present disclosure was provided, with a chemical formula of Li_{1.004}Ni_{0.88}Co_{0.09}Mn_{0.03}W_{0.001}Zr_{0.003}O₂. The high-nickel ternary cathode material included both spherical secondary particles and single-crystal particles, where there was basically no W inside the single-crystal particles and the spherical secondary particles were doped with W; and the high-nickel ternary cathode material had a median diameter of 4.2 µm and an SSA of 0.72 m²/g.

A preparation method of the W-containing high-nickel ternary cathode material in this example was as follows:
(1) A mixed solution of 0.88 mol/L nickel sulfate, 0.09 mol/L cobalt sulfate, and 0.03 mol/L manganese sulfate was prepared according to a Ni-Co-Mn molar ratio of 0.88:0.09:0.03; a 3 mol/L sodium hydroxide solution and a 1 mol/L ammonia solution were prepared; a pH of the mixed solution was controlled at 11.8 using the sodium hydroxide solution and the ammonia solution (with an ammonia value of 3.5 g/L), and then the mixed solution was continuously stirred at a rotational speed of 800 rpm and fed into a reactor at a flow rate of 70 ml/min, during which a pH of the system was controlled at 11.8 (with an ammonia value of 3.5 g/L) by the sodium hydroxide solution and the ammonia solution, a median particle size was controlled at 3.8 µm during crystallization, and the flow rate was controlled through cocurrent flow; and an obtained precursor was washed, centrifuged, and dried to obtain a precursor A.
(2) A mixed solution of 0.88 mol/L nickel sulfate, 0.09 mol/L cobalt sulfate, and 0.03 mol/L manganese sulfate was prepared according to a Ni-Co-Mn molar ratio of 0.88:0.09:0.03, and then AMT was added to the mixed solution, where a molar ratio of tungsten to a sum of nickel, cobalt, and manganese in the mixed solution was 0.001:1 and W had a concentration of 0.002 mol/L in the mixed solution; a 3 mol/L sodium hydroxide solution and a 1 mol/L ammonia solution were prepared; a pH of the mixed solution was controlled at 11.8 using the sodium hydroxide solution and the ammonia solution (with an ammonia value of 3.5 g/L), and then the mixed solution was continuously stirred at a rotational speed of 800 rpm and fed into a reactor at a flow rate of 70 ml/min, during which a pH of the system was controlled at 11.8 (with an ammonia value of 3.5 g/L) by the sodium hydroxide solution and the ammonia solution, a median particle size was controlled at 3.6 µm during crystallization, and the flow rate was controlled through cocurrent flow; and an obtained precursor was washed, centrifuged, and dried to obtain a W-doped precursor B.
(3) The precursor B, the precursor A, LiOH, and ZrO₂ were mixed, and a resulting mixed material was stirred for 30 min at a speed of 2,000 r/min, where a mass ratio of the precursor B to the precursor A was 1:1, a molar ratio of Zr to a sum of Ni, Co, and Mn in a theoretical cathode material was 0.3%, and a molar ratio of Li to other main metal elements was about 1:1; the mixed material was subjected to one-time high-temperature sintering for 14 h at a temperature of 870°C and an oxygen flow rate of 45 L/min in an oxygen furnace; and after the sintering was completed, a sintering product was naturally cooled under the protection of an oxygen atmosphere, then taken out from the furnace, and crushed with a crusher in a constant-temperature and constant-humidity environment to a particle size of 4.2 µm to obtain the high-nickel ternary cathode material Li_{1.004}Ni_{0.88}Co_{0.09}Mn_{0.03}W_{0.001}Zr_{0.003}O₂ in which a theoretical mass ratio of spherical secondary particles to single-crystal particles was 1:1.

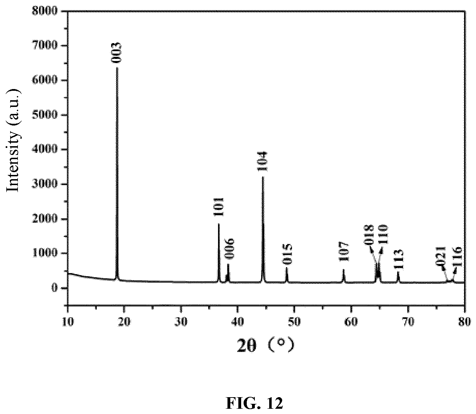

The product prepared in this example was subjected to FE-SEM, and a resulting image showed that, in the high-nickel cathode material prepared in this example, there were both spherical secondary particles and single-crystal particles, and the spherical secondary particles had uniform sphericity and were uniformly distributed. A mass ratio of the spherical secondary particles to the single-crystal particles in the high-nickel ternary cathode material was adjusted by adjusting a ratio of the W-containing precursor B to the W-free precursor A in the raw material, and was about 1:1. A powder of the cathode material had a compacted density of 3.62 g/cm³, a median particle size of 4.2 µm, an SSA of 0.72 m²/g, and a pH of 11.2. The spherical secondary particles had a particle size range of 2.4 µm to 5.5 µm, and the single-crystal particles had a particle size range of 1.0 µm to 5.5 µm. Through the EDS analysis in combination with the subsequent test of comparative examples, it can be seen that W was mainly distributed in the spherical secondary particles (which was not only internally doped, but also coated on the surface of the spherical secondary particles); and for the single-crystal particles, only the surface was covered with a W-containing coating layer, and there was almost no W inside, indicating that the W was only distributed on the surface. According to Gibbs free energy, lithium tungstate was easily formed, and thus a lithium tungstate layer was preferentially formed on a surface with W and Li. Zr was uniformly distributed on the surface of single-crystal and spherical secondary particles, resulting in uniform doping. The Rietveld refinement was conducted on XRD data, and a resulting pattern was shown in FIG. 12, with a c value of 14.1968 and an a value of 2.8726. The c value and the c/a value were both significantly increased, indicating that W effectively increased the c value. On the premise of ignoring element loss during the preparation process, a Ni-Co-Mn molar ratio in the spherical secondary particles was consistent with a Ni-Co-Mn molar ratio in the single-crystal particles, and the particles of the two morphologies had the same crystal structure and lattice parameters.

The high-nickel ternary cathode material with two morphologies prepared in this example was made into a coin-type cell with a lithium sheet as a negative electrode for evaluation test:
(1) The coin-type cell was charged at 0.1 C and 25°C in a voltage range of 3.0 V to 4.3 V, and a capacity of 218 mAh/g was obtained; then the coin-type cell was discharged at 0.2 C/0.5 C/1.0 C/2.0 C, and results showed that a discharge capacity retention rate was 93.6% at 2.0 C/0.2 C; and 60 cycles were further conducted at 1 C, and a capacity retention rate was 98.1%. It indicates that the high-nickel cathode material with two morphologies can effectively improve the capacity, cycling performance, and rate performance. (2) 60 cycles were conducted at 50°C in a voltage range of 3.0 V to 4.3 V, and a capacity retention rate was 97.0%. It indicates that the high-nickel ternary cathode material with two morphologies has excellent high-temperature cycling performance.

### Example 3:

A W-containing high-nickel ternary cathode material of the present disclosure was provided, with a chemical formula of Li_{1.0029}Ni_{0.83}Co_{0.11}Mn_{0.06}W_{0.0009}La_{0.002}O₂. The high-nickel ternary cathode material included both spherical secondary particles and single-crystal particles, where there was basically no W inside the single-crystal particles and the spherical secondary particles were doped with W; and the high-nickel ternary cathode material had a median diameter of 5.0 µm and an SSA of 0.80 m²/g.

A preparation method of the W-containing high-nickel ternary cathode material in this example was as follows:
(1) A mixed solution of 0.83 mol/L nickel sulfate, 0.11 mol/L cobalt sulfate, and 0.06 mol/L manganese sulfate was prepared according to a Ni-Co-Mn molar ratio of 0.83:0.11:0.06; a 3 mol/L sodium hydroxide solution and a 1 mol/L ammonia solution were prepared; a pH of the mixed solution was controlled at 11.5 using the sodium hydroxide solution and the ammonia solution (with an ammonia value of 3.5 g/L), and then the mixed solution was continuously stirred at a rotational speed of 800 rpm and fed into a reactor at a flow rate of 75 ml/min, during which a pH of the system was controlled at 11.5 (with an ammonia value of 3.5 g/L) by the sodium hydroxide solution and the ammonia solution, a median particle size was controlled at 3.5 µm during crystallization, and the flow rate was controlled through cocurrent flow; and an obtained precursor was washed, centrifuged, and dried to obtain a precursor A.
(2) A mixed solution of 0.83 mol/L nickel sulfate, 0.11 mol/L cobalt sulfate, and 0.06 mol/L manganese sulfate was prepared according to a Ni-Co-Mn molar ratio of 0.83:0.11:0.06, and then AMT was added to the mixed solution, where a molar ratio of tungsten to a sum of nickel, cobalt, and manganese in the mixed solution was 0.0009:1 and W had a concentration of 0.003mol/L in the mixed solution; a 3 mol/L sodium hydroxide solution and a 1 mol/L ammonia solution were prepared; a pH of the mixed solution was controlled at 11.5 using the sodium hydroxide solution and the ammonia solution (with an ammonia value of 3.5 g/L), and then the mixed solution was continuously stirred at a rotational speed of 800 rpm and fed into a reactor at a flow rate of 75 ml/min, during which a pH of the system was controlled at 11.5 (with an ammonia value of 3.5 g/L) by the sodium hydroxide solution and the ammonia solution, a median particle size was controlled at 3.6 µm during crystallization, and the flow rate was controlled through cocurrent flow; and an obtained precursor was washed, centrifuged, and dried to obtain a W-doped precursor B.
(3) The precursor B, the precursor A, LiOH, and La₂O₃ were mixed, and a resulting mixed material was stirred for 30 min at a speed of 2,000 r/min, where a mass ratio of the precursor B to the precursor A was 3:7, a molar ratio of La to a sum of Ni, Co, and Mn in a theoretical cathode material was 0.2%, and a molar ratio of Li to other main metal elements was about 1:1; the mixed material was subjected to one-time high-temperature sintering for 14 h at a temperature of 880°C and an oxygen flow rate of 40 L/min in an oxygen furnace; and after the sintering was completed, a sintering product was naturally cooled under the protection of an oxygen atmosphere, then taken out from the furnace, and crushed with a crusher in a constant-temperature and constant-humidity environment to a particle size of 5.0 µm to obtain the high-nickel ternary cathode material Li_{1.0029}Ni_{0.83}Co_{0.11}Mn_{0.06}W_{0.0009}La_{0.002}O₂ in which a theoretical mass ratio of spherical secondary particles to single-crystal particles was 3:7.

According to FE-SEM, in the high-nickel ternary cathode material prepared, there were both spherical secondary particles and single-crystal particles, and the spherical secondary particles had uniform sphericity and were uniformly distributed. A mass ratio of the spherical secondary particles to the single-crystal particles in the high-nickel ternary cathode material was about 3:7. A powder of the cathode material had a compacted density of 3.62 g/cm³, a median particle size of 5.0 µm, an SSA of 0.80 m²/g, and a pH of 11.1. The spherical secondary particles had a particle size range of 2.4 µm to 5.5 µm, and the single-crystal particles had a particle size range of 1.0 µm to 5.5 µm. Through the EDS analysis in combination with the subsequent test of comparative examples, it can be seen that W was mainly distributed in the spherical secondary particles (which was not only internally doped, but also coated on the surface of the spherical secondary particles); and for the single-crystal particles, only the surface was covered with a W-containing coating layer, and there was almost no W inside, indicating that the W was only distributed on the surface. According to Gibbs free energy, lithium tungstate was easily formed, and thus a lithium tungstate layer was preferentially formed on a surface with W and Li. La was uniformly distributed on the surface of single-crystal and spherical secondary particles, resulting in uniform doping. The Rietveld refinement was conducted on XRD data, and it can be known that a c value was 14.1972 and an a value was 2.8725. The c value and the c/a value were both significantly increased, indicating that W effectively increased the c value. On the premise of ignoring element loss during the preparation process, a Ni-Co-Mn molar ratio in the spherical secondary particles was consistent with a Ni-Co-Mn molar ratio in the single-crystal particles, and the particles of the two morphologies had the same crystal structure and lattice parameters.

The high-nickel ternary cathode material with two morphologies was made into a coin-type cell with a lithium sheet as a negative electrode for evaluation test:
(1) The coin-type cell was charged at 0.1 C and 25°C in a voltage range of 3.0 V to 4.3 V, and a capacity of 213 mAh/g was obtained; then the coin-type cell was discharged at 0.2 C/0.5 C/1.0 C/2.0 C, and results showed that a discharge capacity retention rate was 94.6% at 2.0 C/0.2 C; and 60 cycles were further conducted at 1 C, and a capacity retention rate was 98.2%. It indicates that the high-nickel cathode material with two morphologies can effectively improve the capacity, cycling performance, and rate performance. (2) 60 cycles were conducted at 50°C in a voltage range of 3.0 V to 4.3 V, and a capacity retention rate was 97.2%. It indicates that the high-nickel ternary cathode material with two morphologies has excellent high-temperature cycling performance.

### Example 4:

A W-containing high-nickel ternary cathode material of the present disclosure was provided, with a chemical formula of Li_{1.0042}Ni_{0.92}Co_{0.06}Mn_{0.02}W_{0.0012}Ti_{0.003}O₂. The high-nickel ternary cathode material included both spherical secondary particles and single-crystal particles, where there was basically no W inside the single-crystal particles and the spherical secondary particles were doped with W; and the high-nickel ternary cathode material had a median diameter of 3.8 µm and an SSA of 0.81 m²/g.

A preparation method of the W-containing high-nickel ternary cathode material in this example was as follows:
(1) A mixed solution of 0.92 mol/L nickel sulfate, 0.06 mol/L cobalt sulfate, and 0.02 mol/L manganese sulfate was prepared according to a Ni-Co-Mn molar ratio of 0.92:0.06:0.02; a 3 mol/L sodium hydroxide solution and a 1 mol/L ammonia solution were prepared; a pH of the mixed solution was controlled at 11.9 using the sodium hydroxide solution and the ammonia solution (with an ammonia value of 4 g/L), and then the mixed solution was continuously stirred at a rotational speed of 800 rpm and fed into a reactor at a flow rate of 60 ml/min, during which a pH of the system was controlled at 11.9 (with an ammonia value of 4 g/L) by the sodium hydroxide solution and the ammonia solution, a median particle size was controlled at 3.8 µm during crystallization, and the flow rate was controlled through cocurrent flow; and an obtained precursor was washed, centrifuged, and dried to obtain a precursor A.
(2) A mixed solution of 0.92 mol/L nickel sulfate, 0.06 mol/L cobalt sulfate, and 0.02 mol/L manganese sulfate was prepared according to a Ni-Co-Mn molar ratio of 0.92:0.06:0.02, and then AMT was added to the mixed solution, where a molar ratio of tungsten to a sum of nickel, cobalt, and manganese in the mixed solution was 0.0012:1 and W had a concentration of 0.003mol/L in the mixed solution; a 3 mol/L sodium hydroxide solution and a 1 mol/L ammonia solution were prepared; a pH of the mixed solution was controlled at 11.9 using the sodium hydroxide solution and the ammonia solution (with an ammonia value of 4 g/L), and then the mixed solution was continuously stirred at a rotational speed of 800 rpm and fed into a reactor at a flow rate of 60 ml/min, during which a pH of the system was controlled at 11.9 (with an ammonia value of 4 g/L) by the sodium hydroxide solution and the ammonia solution, a median particle size was controlled at 3.8 µm during crystallization, and the flow rate was controlled through cocurrent flow; and an obtained precursor was washed, centrifuged, and dried to obtain a W-doped precursor B.
(3) The precursor B, the precursor A, LiOH, and TiO₂ were mixed, and a resulting mixed material was stirred for 30 min at a speed of 2,500 r/min, where a mass ratio of the precursor B to the precursor A was 2:3, a molar ratio of Ti to a sum of Ni, Co, and Mn in a theoretical cathode material was 0.3%, and a molar ratio of Li to other main metal elements was about 1:1; the mixed material was subjected to one-time high-temperature sintering for 12 h at a temperature of 860°C and an oxygen flow rate of 50 L/min in an oxygen furnace; and after the sintering was completed, a sintering product was naturally cooled under the protection of an oxygen atmosphere, then taken out from the furnace, and crushed with a crusher in a constant-temperature and constant-humidity environment to a particle size of 3.8 µm to obtain the high-nickel ternary cathode material Li_{1.0042}Ni_{0.92}Co_{0.06}Mn_{0.02}W_{0.0012}Ti_{0.003}O₂ in which a theoretical mass ratio of spherical secondary particles to single-crystal particles was 2:3.

According to FE-SEM, in the high-nickel ternary cathode material prepared, there were both spherical secondary particles and single-crystal particles, and the spherical secondary particles had uniform sphericity and were uniformly distributed. A mass ratio of the spherical secondary particles to the single-crystal particles in the high-nickel ternary cathode material was about 2:3. A powder of the cathode material had a compacted density of 3.63 g/cm³, a median particle size of 3.8 µm, an SSA of 0.81 m²/g, and a pH of 11.6. The spherical secondary particles had a particle size range of 2.4 µm to 5.5 µm, and the single-crystal particles had a particle size range of 1.0 µm to 5.5 µm. Through the EDS analysis in combination with the subsequent test of comparative examples, it can be seen that W was mainly distributed in the spherical secondary particles (which was not only internally doped, but also coated on the surface of the spherical secondary particles); and for the single-crystal particles, only the surface was covered with a W-containing coating layer, and there was almost no W inside, indicating that the W was only distributed on the surface. According to Gibbs free energy, lithium tungstate was easily formed, and thus a lithium tungstate layer was preferentially formed on a surface with W and Li. Ti was uniformly distributed on the surface of single-crystal and spherical secondary particles, resulting in uniform doping. The Rietveld refinement was conducted on XRD data, and it can be known that a c value was 14.1952 and an a value was 2.8726. The c value and the c/a value were both increased, indicating that W effectively increased the c value. On the premise of ignoring element loss during the preparation process, a Ni-Co-Mn molar ratio in the spherical secondary particles was consistent with a Ni-Co-Mn molar ratio in the single-crystal particles, and the particles of the two morphologies had the same crystal structure and lattice parameters.

The high-nickel ternary cathode material with two morphologies was made into a coin-type cell with a lithium sheet as a negative electrode for evaluation test:
(1) The coin-type cell was charged at 0.1 C and 25°C in a voltage range of 3.0 V to 4.3 V, and a capacity of 223 mAh/g was obtained; then the coin-type cell was discharged at 0.2 C/0.5 C/1.0 C/2.0 C, and results showed that a discharge capacity retention rate was 93.2% at 2.0 C/0.2 C; and 60 cycles were further conducted at 1 C, and a capacity retention rate was 97.9%. It indicates that the high-nickel cathode material with two morphologies can effectively improve the capacity, cycling performance, and rate performance. (2) 60 cycles were conducted at 50°C in a voltage range of 3.0 V to 4.3 V, and a capacity retention rate was 96.5%. It indicates that the high-nickel ternary cathode material with two morphologies has excellent high-temperature cycling performance.

### Comparative Example 1:

A high-nickel spherical-secondary-particle ternary cathode material was prepared using only a tungsten-doped precursor in Comparative Example 1, which was formed by doping LNMCO with W and Al and had a molecular formula of Li_{1.0068}Ni_{0.8}Co_{0.1}Mn_{0.1}W_{0.0008}Al_{0.006}O₂. A preparation method of the ternary cathode material included the following steps:
(1) A mixed solution of 0.8 mol/L nickel sulfate, 0.1 mol/L cobalt sulfate, and 0.1 mol/L manganese sulfate was prepared according to a Ni-Co-Mn molar ratio of 0.8:0.1:0.1, and then AMT was added to the mixed solution, where W had a concentration of 0.000 8mol/L in the mixed solution; a 3 mol/L sodium hydroxide solution and a 1 mol/L ammonia solution were prepared; a pH of the mixed solution was controlled at 11.6 using the sodium hydroxide solution and the ammonia solution (with an ammonia value of 3 g/L), and then the mixed solution was continuously stirred at a rotational speed of 900 rpm and fed into a reactor at a flow rate of 75 ml/min, during which a pH of the system was controlled at 11.6 (with an ammonia value of 3 g/L) by the sodium hydroxide solution and the ammonia solution, a median particle size was controlled at 3.8 µm during crystallization, and the flow rate was controlled through cocurrent flow; and an obtained precursor was washed, centrifuged, and dried to obtain a W-doped precursor B.
(2) The precursor B, LiOH, and Al₂O₃ were mixed, and a resulting mixed material was stirred for 25 min at a speed of 2,500 r/min, where a molar ratio of Al to a sum of Ni, Co, and Mn in a theoretical cathode material was 0.6% and a molar ratio of Li to other metal elements was about 1:1; the mixed material was subjected to sintering for 12 h at a temperature of 890°C and an oxygen flow rate of 50 L/min in an oxygen furnace; and after the sintering was completed, a sintering product was naturally cooled under the protection of an oxygen atmosphere, then taken out from the furnace, and crushed with a crusher in a constant-temperature and constant-humidity environment to a particle size of 4.5 µm to obtain the high-nickel spherical-secondary-particle ternary cathode material Li_{1.0068}Ni_{0.8}Co_{0.1}Mn_{0.1}W_{0.0008}Al_{0.006}O₂.

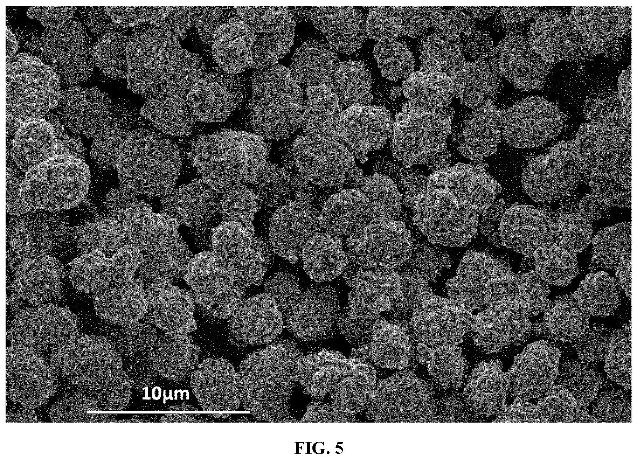

The composition of Comparative Example 1 was basically the same as that of Example 1, but only the W-doped precursor B was used for the preparation through sintering. It can be seen from FE-SEM images in FIG. 1 and FIG. 5 that the high-nickel ternary cathode material prepared in Comparative Example 1 only included uniform spherical secondary particles, which was different from the co-existence of single-crystal particles and spherical secondary particles in Example 1. A powder of the cathode material in this comparative example had a compacted density of 3.36 g/cm³ (which was lower than that of Example 1 due to the lack of a combination of two morphologies), a median particle size of 4.5 µm, an SSA of 0.62 m²/g, and a pH of 11.3. According to EDS analysis, W was uniformly distributed in the spherical secondary particles. The Rietveld refinement was conducted on XRD data, and it can be known that a c value was 14.1982 and an a value was 2.8725. The c value and the c/a value were both increased, indicating that W effectively increased the c value.

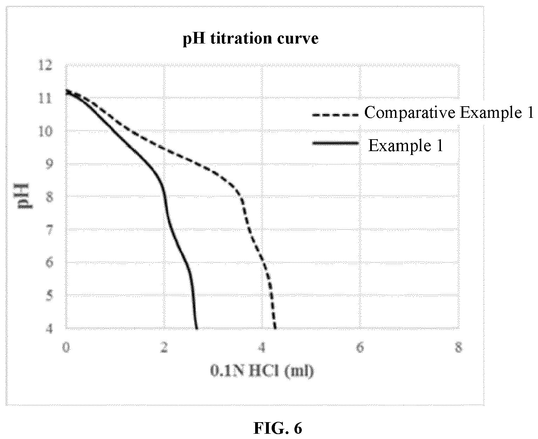

The high-nickel ternary cathode materials obtained in Example 1 and Comparative Example 1 were subjected to pH titration, and titration curves were shown in FIG. 6. It can be seen that the spherical-secondary-particle high-nickel ternary cathode material of Comparative Example 1 that was prepared by sintering only a W-doped precursor consumed a larger volume of hydrochloric acid than example 1 during the titration, indicating that a residual Li content in the material of Comparative Example 1 was higher than a residual Li content in the material of

### Example 1.

The spherical-secondary-particle high-nickel ternary cathode material was made into a coin-type cell with a lithium sheet as a negative electrode for evaluation test:
(1) The coin-type cell was charged at 0.1 C and 25°C in a voltage range of 3.0 V to 4.3 V, and a capacity of 208 mAh/g was obtained; then the coin-type cell was discharged at 0.2 C/0.5 C/1.0 C/2.0 C, and results showed that a discharge capacity retention rate was 95.8% at 2.0 C/0.2 C; and 60 cycles were further conducted at 1 C, and a capacity retention rate was 93.8%. It indicates that the tungsten-doped spherical secondary particles have prominent rate performance and high capacity compared with Example 1 (which is one of the characteristics of small-particle secondary spheres), but show poor room-temperature cycling performance. (2) 60 cycles were conducted at 50°C in a voltage range of 3.0 V to 4.3 V, and a capacity retention rate was 90.6%. Compared with the data of Example 1, it shows that the pure spherical secondary particle morphology leads to unsatisfactory high-temperature cycling performance.

### Comparative Example 2:

A W-free cathode material was prepared in Comparative Example 2, with a molecular formula of Li_{1.0068}Ni_{0.8}Co_{0.1}Mn_{0.1}Al_{0.006}O₂. A preparation method of the cathode material included the following steps:
(1) A mixed solution of 0.8 mol/L nickel sulfate, 0.1 mol/L cobalt sulfate, and 0.1 mol/L manganese sulfate was prepared according to a Ni-Co-Mn molar ratio of 0.8:0.1:0.1; a 3 mol/L sodium hydroxide solution and a 1 mol/L ammonia solution were prepared; a pH of the mixed solution was controlled at 11.6 using the sodium hydroxide solution and the ammonia solution (with an ammonia value of 3 g/L), and then the mixed solution was continuously stirred at a rotational speed of 900 rpm and fed into a reactor at a flow rate of 75 ml/min, during which a pH of the system was controlled at 11.6 (with an ammonia value of 3 g/L) by the sodium hydroxide solution and the ammonia solution, a median particle size was controlled at 3.8 µm during crystallization, and the flow rate was controlled through cocurrent flow; and an obtained precursor was washed, centrifuged, and dried to obtain a precursor A.
(2) The precursor A, LiOH, and Al₂O₃ were mixed, and a resulting mixed material was stirred for 25 min at a speed of 2,500 r/min, where a molar ratio of Al to a sum of Ni, Co, and Mn in a theoretical cathode material was 0.6% and a molar ratio of Li to other main metal elements was about 1:1; the mixed material was subjected to sintering for 12 h at a temperature of 890°C and an oxygen flow rate of 50 L/min in an oxygen furnace; and after the sintering was completed, a sintering product was naturally cooled under the protection of an oxygen atmosphere, then taken out from the furnace, and crushed with a crusher in a constant-temperature and constant-humidity environment to a particle size of 4.5 µm to obtain the single-crystal-particle high-nickel ternary cathode material Li_{1.0068}Ni_{0.8}Co_{0.1}Mn_{0.1}Al_{0.006}O₂.

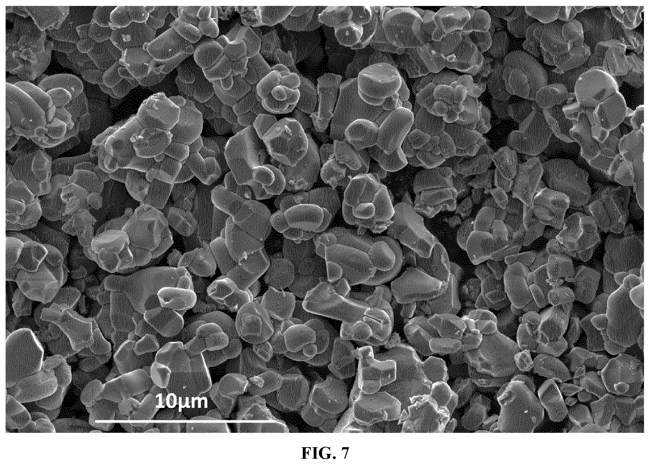

The chemical formula of the product of Comparative Example 2 was the same as the chemical formula of the product of Example 1 except that there was no W. It can be seen from the FE-SEM image shown in FIG. 7 that the high-nickel ternary cathode material prepared in Comparative Example 2 only included uniform single-crystal particles, which was different from the co-existence of single-crystal particles and spherical secondary particles in Example 1, indicating the key role of W in the formation of spherical secondary particles. A powder of the cathode material in this comparative example had a compacted density of 3.68 g/cm³ (pure single-crystal particles led to a high compacted density, and thus would help improve the compacted density of spherical secondary particles when used in combination with the spherical secondary particles), a median particle size of 4.5 µm, an SSA of 0.75 m²/g, and a pH of 11. According to EDS analysis, Al was uniformly distributed in the single-crystal particles. Rietveld refinement was conducted on XRD data, and it can be known that a c value was 14.1941 and an a value was 2.8726. The c value and the c/a value were both reduced compared with that in Example 1, indicating that the c value could not be effectively increased without W.

The single-crystal-particle high-nickel ternary cathode material was made into a coin-type cell with a lithium sheet as a negative electrode for evaluation test:
(1) The coin-type cell was charged at 0.1 C and 25°C in a voltage range of 3.0 Vto 4.3 V, and a capacity of 203 mAh/g was obtained; then the coin-type cell was discharged at 0.2 C/0.5 C/1.0 C/2.0 C, and results showed that a discharge capacity retention rate was 92.3% at 2.0 C/0.2 C; and 60 cycles were further conducted at 1 C, and a capacity retention rate was 95.8%. The rate performance is not significantly improved, and the capacity is low, but the room-temperature cycling performance is prominent and better than that of the spherical secondary particles in Comparative Example 1, which is consistent with the characteristics of a high-nickel single-crystal cathode material. (2) 60 cycles were conducted at 50°C in a voltage range of 3.0 V to 4.3 V, and a capacity retention rate was 94.1%. The high-temperature cycling performance is prominent and better than that of the spherical secondary particles in Comparative Example 1, which is consistent with the characteristics of a high-nickel single-crystal cathode material. However, the high-temperature cycling performance is inferior to that of Example 1, indicating that the W coating layer formed on the surface from co-sintering of two precursors in Example 1 also plays a key role.

### Comparative Example 3:

A high-nickel ternary cathode material was prepared in Comparative Example 3, which was formed by doping LNMCO with Mo and Al and had a molecular formula approximately of Li_{1.0068}Ni_{0.8}Co_{0.1}Mn_{0.1}Mo_{0.0008}Al_{0.006}O₂. A preparation method of the ternary cathode material included the following steps:
(1) A mixed solution of 0.8 mol/L nickel, 0.1 mol/L cobalt, and 0.1 mol/L manganese was prepared according to a Ni-Co-Mn molar ratio of 0.8:0.1:0.1; a 3 mol/L sodium hydroxide solution and a 1 mol/L ammonia solution were prepared; a pH of the mixed solution was controlled at 11.6 using the sodium hydroxide solution and the ammonia solution (with an ammonia value of 3 g/L), and then the mixed solution was continuously stirred at a rotational speed of 800 rpm and fed into a reactor at a flow rate of 80 ml/min, during which a pH of the system was controlled at 11.6 (with an ammonia value of 3 g/L) by the sodium hydroxide solution and the ammonia solution, a median particle size was controlled at 3.8 µm during crystallization, and the flow rate was controlled through cocurrent flow; and an obtained precursor was washed, centrifuged, and dried to obtain a precursor A.
(2) A mixed solution of 0.8 mol/L nickel sulfate, 0.1 mol/L cobalt sulfate, and 0.1 mol/L manganese sulfate was prepared according to a Ni-Co-Mn molar ratio of 0.8:0.1:0.1, and then ammonium molybdate was added to the mixed solution, where Mo had a concentration of 0.004 mol/L in the mixed solution; a 3 mol/L sodium hydroxide solution and a 1 mol/L ammonia solution were prepared; a pH of the mixed solution was controlled at 11.6 using the sodium hydroxide solution and the ammonia solution (with an ammonia value of 3 g/L), and then the mixed solution was continuously stirred at a rotational speed of 800 rpm and fed into a reactor at a flow rate of 80 ml/min, during which a pH of the system was controlled at 11.6 (with an ammonia value of 3 g/L) by the sodium hydroxide solution and the ammonia solution, a median particle size was controlled at 3.8 µm during crystallization, and the flow rate was controlled through cocurrent flow; and an obtained precursor was washed, centrifuged, and dried to obtain a Mo-doped precursor B.
(3) The precursor B, the precursor A, LiOH, and Al₂O₃ were mixed, and a resulting mixed material was stirred for 25 min at a speed of 3,000 r/min, where a mass ratio of the precursor B to the precursor A was 1:4, a molar ratio of Al to a sum of Ni, Co, and Mn in a theoretical cathode material was 0.6%, and a molar ratio of Li to other metal elements was about 1:1; the mixed material was subjected to sintering for 10 h at a temperature of 890°C and an oxygen flow rate of 40 L/min in an oxygen furnace; and after the sintering was completed, a sintering product was naturally cooled under the protection of an oxygen atmosphere, then taken out from the furnace, and crushed with a crusher in a constant-temperature and constant-humidity environment to a particle size of 4.5 µm to obtain the single-crystal-particle high-nickel ternary cathode material Li_{1.0068}Ni_{0.8}Co_{0.1}Mn_{0.1}Mo_{0.0008}Al_{0.006}O₂.

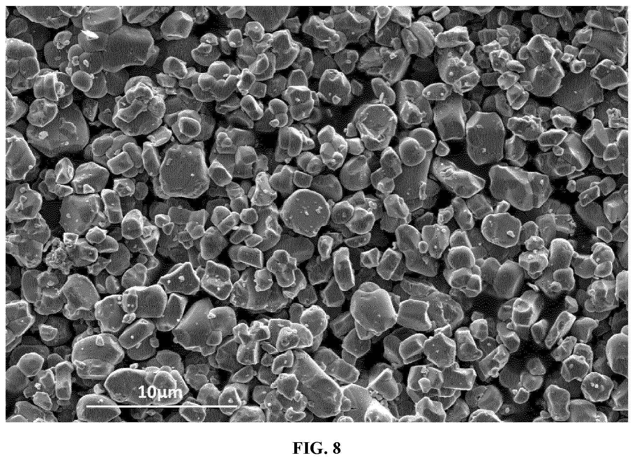

In Comparative Example 3, Mo of the same subgroup and a similar ionic radius was used to replace W in Example 1. It can be seen from the FE-SEM image shown in FIG. 8 that the high-nickel ternary cathode material prepared in Comparative Example 3 only included uniform single-crystal particles, which was different from the co-existence of single-crystal particles and spherical secondary particles in Example 1. It can be seen that W played a key role in the formation of spherical secondary particles, and another element could not lead to the formation of the cathode material with the two morphologies. A powder of the cathode material in this comparative example had a compacted density of 3.65 g/cm³, a median particle size of 4.5 µm, an SSA of 0.78 m²/g, and a pH of 11. According to EDS analysis, Al was uniformly distributed in the single-crystal particles. Rietveld refinement was conducted on XRD data, and it can be known that a c value was 14.1944 and an a value was 2.8725. The c value and the c/a value were both reduced compared with that in Example 1, indicating that the c value could not be effectively increased without W. It showed that, after the W in the precursor B was replaced, the cathode material with the two morphologies could not be formed, but a pure single-crystal morphology was formed.

The single-crystal-particle high-nickel ternary cathode material was made into a coin-type cell with a lithium sheet as a negative electrode for evaluation test:
(1) The coin-type cell was charged at 0.1 C and 25°C in a voltage range of 3.0 V to 4.3 V, and a capacity of 202.5 mAh/g was obtained; then the coin-type cell was discharged at 0.2 C/0.5 C/1.0 C/2.0 C, and results showed that a discharge capacity retention rate was 92.1% at 2.0 C/0.2 C; and 60 cycles were further conducted at 1 C, and a capacity retention rate was 95.6%. The rate performance is not significantly improved, and the capacity is low, but the room-temperature cycling performance is excellent, which is consistent with the characteristics of a high-nickel single-crystal cathode material. (2) 60 cycles were conducted at 50°C in a voltage range of 3.0 V to 4.3 V, and a capacity retention rate was 93.6%. It shows that, after the W is replaced by another element, the electrochemical performance of a product is also consistent with the characteristics of a single-crystal material.

### Comparative Example 4:

A high-nickel ternary cathode material was prepared in this comparative example, which was formed by doping LNMCO with W and Al and had a molecular formula approximately of Li_{1.0068}Ni_{0.8}Co_{0.1}Mn_{0.1}W_{0.0008}Al_{0.006}O₂. A preparation method of the ternary cathode material included the following steps:
(1) A mixed solution of 0.8 mol/L nickel sulfate, 0.1 mol/L cobalt sulfate, and 0.1 mol/L manganese sulfate was prepared according to a Ni-Co-Mn molar ratio of 0.8:0.1:0.1; a 3 mol/L sodium hydroxide solution and a 1 mol/L ammonia solution were prepared; a pH of the mixed solution was controlled at 11.6 using the sodium hydroxide solution and the ammonia solution (with an ammonia value of 3 g/L), and then the mixed solution was continuously stirred at a rotational speed of 800 rpm and fed into a reactor at a flow rate of 80 ml/min, during which a pH of the system was controlled at 11.6 (with an ammonia value of 3 g/L) by the sodium hydroxide solution and the ammonia solution, a median particle size was controlled at 3.8 µm during crystallization, and the flow rate was controlled through cocurrent flow; and an obtained precursor was washed, centrifuged, and dried to obtain a precursor A.
(2) A mixed solution of 0.8 mol/L nickel sulfate, 0.1 mol/L cobalt sulfate, and 0.1 mol/L manganese sulfate was prepared according to a Ni-Co-Mn molar ratio of 0.8:0.1:0.1, and then AMT was added to the mixed solution, where W had a concentration of 0.004 mol/L in the mixed solution; a 3 mol/L sodium hydroxide solution and a 1 mol/L ammonia solution were prepared; a pH of the mixed solution was controlled at 11.6 using the sodium hydroxide solution and the ammonia solution (with an ammonia value of 3 g/L), and then the mixed solution was continuously stirred at a rotational speed of 800 rpm and fed into a reactor at a flow rate of 80 ml/min, during which a pH of the system was controlled at 11.6 (with an ammonia value of 3 g/L) by the sodium hydroxide solution and the ammonia solution, a median particle size was controlled at 3.8 µm during crystallization, and the flow rate was controlled through cocurrent flow; and an obtained precursor was washed, centrifuged, and dried to obtain a W-doped precursor B.
(3) The precursor A, LiOH, and Al₂O₃ were mixed, and a resulting mixed material was stirred for 25 min at a speed of 3,000 r/min, where a molar ratio of Al to a sum of Ni, Co, and Mn in a theoretical cathode material was 0.6% and a molar ratio of Li to other metal elements was 1: 1; the mixed material was subjected to sintering for 10 h at a temperature of 890°C and an oxygen flow rate of 40 L/min in an oxygen furnace; and after the sintering was completed, a sintering product was naturally cooled under the protection of an oxygen atmosphere, then taken out from the furnace, and crushed with a crusher in a constant-temperature and constant-humidity environment to a particle size of 4.5 µm to obtain a single-crystal-particle cathode material A-1.
(4) The precursor B, LiOH, and Al₂O₃ were mixed, and a resulting mixed material was stirred for 25 min at a speed of 3,000 r/min, where a molar ratio of Al to a sum of Ni, Co, and Mn in a theoretical cathode material was 0.6% and a molar ratio of Li to other metal elements was 1: 1; the mixed material was subjected to sintering for 10 h at a temperature of 890°C and an oxygen flow rate of 40 L/min in an oxygen furnace; and after the sintering was completed, a sintering product was naturally cooled under the protection of an oxygen atmosphere, then taken out from the furnace, and crushed with a crusher in a constant-temperature and constant-humidity environment to a particle size of 4.5 µm to obtain a spherical-secondary-particle cathode material B-1.
(5) The cathode materials of the two morphologies were physically mixed thoroughly according to a B-1: A-1 mass ratio of 1:4 to obtain the high-nickel ternary cathode material with the molecular formula of Li_{1.0068}Ni_{0.8}Co_{0.1}Mn_{0.1}W_{0.0008}Al_{0.006}O₂.

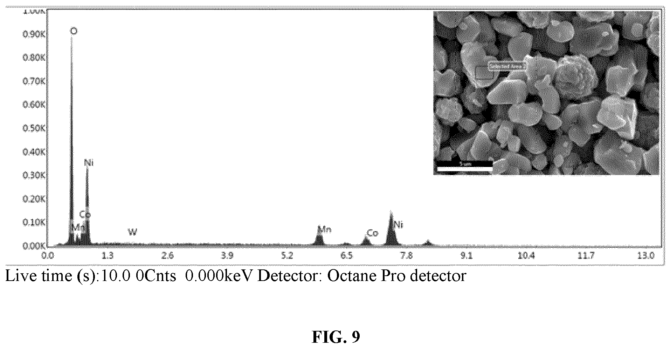

An area was selected from the surface of the single-crystal particles in the mixed material of this comparative example to conduct EDS spectrum mapping, and as shown in FIG. 9, no W was found on the single-crystal particles. An area was selected from the surface of the single-crystal particles in Example 1 to conduct EDS spectrum mapping, and as shown in FIG. 3, there was a peak of W, indicating that, due to the blending and sintering in the precursor stage, W diffused from the interior of the spherical secondary particles and formed a uniform tungsten-containing coating layer on the single-crystal particles. The tungsten-containing coating layer facilitated the improvement of the cycling performance of the material, which could be proved from the following electrochemical performance analysis.

The ternary cathode material obtained from physical mixing was made into a coin-type cell with a lithium sheet as a negative electrode for evaluation test:
(1) The coin-type cell was charged at 0.1 C and 25°C in a voltage range of 3.0 V to 4.3 V, and a capacity of 204 mAh/g was obtained; then the coin-type cell was discharged at 0.2 C/0.5 C/1.0 C/2.0 C, and results showed that a discharge capacity retention rate was 92.2% at 2.0 C/0.2 C; and 60 cycles were further conducted at 1 C, and a capacity retention rate was 93.6%. (2) 60 cycles were conducted at 50°C in a voltage range of 3.0 V to 4.3 V, and a capacity retention rate was 92.1%. It shows that, in the material of this comparative example, W fails to coat and modify the surface of the single-crystal particles; and although the capacity is not much different from that of Example 1, the rate performance is reduced and the cycling performance is significantly worse than that of Example 1.

## Claims

1. A W-containing high-nickel ternary cathode material, with a chemical formula of LiₐNiₓCo_{y}Mn_{1-x-y}W_{b}M_{c}O₂, wherein the high-nickel ternary cathode material comprises both spherical secondary particles and single-crystal particles; there is basically no W inside the single-crystal particles; the spherical secondary particles are doped with W; and in the molecular formula of LiₐNiₓCo_{y}Mn_{1-x-y}W_{b}M_{c}O₂, 1.00 ≤ a ≤ 1.16, 0.7 < x < 1, 0 < y < 0.3, and 0.002 < b+c < 0.01, and the M is one or more from the group consisting of Zr, Mg, Ti, Al, Si, La, Ba, Sr, Nb, Cr, Mo, Ca, Y, In, Sn, and F; and the high-nickel ternary cathode material has a specific surface area of 0.8 ± 0.3 m²/g.

2. The W-containing high-nickel ternary cathode material according to claim 1, wherein the spherical secondary particles have a particle size of 2.4 µm to 5.5 µm; the single-crystal particles have a particle size of 1.0 µm to 5.5 µm; and the high-nickel ternary cathode material has a median diameter of 3.0 µm to 5.5 µm.

3. The W-containing high-nickel ternary cathode material according to claim 1 or 2, wherein a surface of the high-nickel ternary cathode material is at least partly or completely coated with a lithium tungstate layer.

4. A preparation method of a W-containing high-nickel ternary cathode material, comprising the following steps:
(1) mixing and dissolving a soluble nickel salt, a soluble cobalt salt, and a soluble manganese salt in deionized water according to a nickel-cobalt-manganese molar ratio in a molecular formula of the product, continuously stirring a resulting solution in a reactor, and adding an ammonia solution and a sodium hydroxide solution for co-precipitation to prepare a W-free precursor A;
(2) mixing and dissolving a soluble nickel salt, a soluble cobalt salt, and a soluble manganese salt in deionized water according to a nickel-cobalt-manganese molar ratio in the molecular formula of the product, adding a soluble tungsten salt, and after the tungsten salt is completely dissolved, transferring a resulting solution to a reactor; and continuously stirring the solution, and adding an ammonia solution and a sodium hydroxide solution for co-precipitation to prepare a W-containing precursor B; and
(3) thoroughly mixing the precursor A, the precursor B, a lithium source, and a doping element M-containing compound, subjecting a resulting mixed material to high-temperature sintering in an oxygen atmosphere, and crushing a sintered material to a median diameter of 3.0 µm to 5.5 µm to obtain the W-containing high-nickel ternary cathode material, wherein basically no W is present inside the single crystal particles; the spherical secondary particles are doped with W, which has a molecular formula of LiₐNiₓCo_{y}Mn_{1-x-y}W_{b}M_{c}O₂, 1.00 ≤ a ≤ 1.16, 0.7 < x < 1, 0 < y < 0.3, and 0.002 < b+c < 0.01, and the M is one or more from the group consisting of Zr, Mg, Ti, Al, Si, La, Ba, Sr, Nb, Cr, Mo, Ca, Y, In, Sn, and F; and the high-nickel ternary cathode material has a specific surface area of 0.8 ± 0.3 m²/g, and comprises both spherical secondary particles and single-crystal particles.

5. The preparation method according to claim 4, wherein in step (2), the soluble tungsten salt comprises one or more from the group consisting of ammonium metatungstate (AMT), phosphotungstic acid (PTA), sodium tungstate, and ammonium paratungstate (APT); and a molar ratio of tungsten in the soluble tungsten salt to a sum of nickel, cobalt, and manganese in the precursor B is (0.00025-0.00550): 1.

6. The preparation method according to claim 4, wherein in step (3), the lithium source is one or more from the group consisting of lithium carbonate, lithium hydroxide, lithium acetate, and lithium oxalate; and a molar ratio of lithium in the lithium source to a sum of main metal elements in the precursor B, the precursor A, and the doping element M-containing compound is (0.95-1.1):1.

7. The preparation method according to claim 4, wherein in step (3), the doping element M-containing compound is an oxide of the M element, and the oxide of the M element is at least one from the group consisting of ZrO₂, MgO, TiO₂, Al₂O₃, SiO₂, La₂O₃, BaO, SrO, Nb₂O₅, Cr₂O₃, MoO₃, CaO, Y₂O₃, In₂O₃, and SnO₂.

8. The preparation method according to any one of claims 4 to 7, wherein in step (3), the high-temperature sintering is conducted for 8 h to 18 h at a temperature of 750°C to 980°C and an oxygen flow rate of 20 L/min to 60 L/min.

9. The preparation method according to any one of claims 4 to 7, wherein in step (3), the high-temperature sintering is conducted once.

10. The preparation method according to claim 4, wherein a mass ratio of the spherical secondary particles to the single-crystal particles in the high-nickel ternary cathode material is determined by a ratio of the W-containing precursor B to the W-free precursor A in a raw material.

11. The preparation method according to claim 10, wherein a mass ratio of the precursor B to the precursor A is (0.05-19):1.

12. The preparation method according to claim 11, wherein the mass ratio of the precursor B to the precursor A is (0.4-1.5): 1.

13. The preparation method according to claim 4, wherein on the premise of ignoring element loss during a preparation process of the high-nickel ternary cathode material, the Ni-Co-Mn molar ratio in the spherical secondary particles is consistent with the Ni-Co-Mn molar ratio in the single-crystal particles.

## Patentansprüche

1. W-haltiges ternäres Hochnickel-Kathodenmaterial mit der chemischen Formel LiaNixCoyMmx-yWbMcCh, wobei das ternäre Hochnickel-Kathodenmaterial sowohl kugelförmige sekundäre Teilchen als auch einkristalline Teilchen umfasst, wobei im wesentlichen kein W innerhalb der einkristallinen Teilchen vorhanden ist, wobei die kugelförmigen sekundären Teilchen mit W dotiert sind, und wobei in der Molekülformel von LiₐNiₓCo_{y}Mn_{1-x-y}W_{b}M_{c}O₂, 1,00 ≤ a ≤ 1,16, 0,7 <x<1,0<y< 0,3, und 0,002 < b+c < 0,01, und das M eines oder mehrere aus der Gruppe ist, die aus Zr, Mg, Ti, Al, Si, La, Ba, Sr, Nb, Cr, Mo, Ca, Y, In, Sn und F besteht; und das ternäre Hochnickel-Kathodenmaterial eine spezifische Oberfläche von 0,8 ± 0,3 m²/g aufweist.

2. W-haltiges ternäres Hochnickel-Kathodenmaterial nach Anspruch 1, wobei die kugelförmige sekundäre Teilchen eine Teilchengröße von 2,4 µm bis 5,5 µm haben; die einkristalline Teilchen eine Teilchengröße von 1,0 µm bis 5,5 µm haben; und das ternäre Hochnickel-Kathodenmaterial einen mittleren Durchmesser von 3,0 pm bis 5,5 µm hat.

3. W-haltiges ternäres Hochnickel-Kathodenmaterial nach Anspruch 1 oder 2, wobei eine Oberfläche des W-haltigen ternären Hochnickel-Kathodenmaterials zumindest teilweise oder vollständig mit einer Lithiumwolframatschicht beschichtet ist.

4. Verfahren zur Herstellung eines W-haltigen ternären Hochnickel-Kathodenmaterial, umfassend die folgenden Schritte:
(1) Mischen und Auflösen eines löslichen Nickelsalzes, eines löslichen Kobaltsalzes und eines löslichen Mangansalzes in deionisiertem Wasser gemäß einem Nickel-Kobalt-Mangan-Molverhältnis in einer Molekülformel des Produkts, kontinuierliches Rühren einer resultierenden Lösung in einem Reaktor und Hinzufügen einer Ammoniaklösung und einer Natriumhydroxidlösung zur gemeinsamen Ausfällung, um einen W-freien Vorläufer A herzustellen;
(2) Mischen und Auflösen eines löslichen Nickelsalzes, eines löslichen Kobaltsalzes und eines löslichen Mangansalzes in deionisiertem Wasser gemäß einem Nickel-Kobalt-Mangan-Molverhältnis in der Molekülformel des Produkts, Hinzufügen eines löslichen Wolframsalzes; nachdem das Wolframsalz vollständig aufgelöst ist, Überführen der resultierenden Lösung in einen Reaktor; und kontinuierliches Rühren der Lösung und Hinzufügen einer Ammoniaklösung und einer Natriumhydroxidlösung zur gemeinsamen Ausfällung, um einen W-haltigen Vorläufer B herzustellen; und
(3) gründliches Mischen des Vorläufers A, des Vorläufers B, einer Lithiumquelle und einer M-haltigen Dotierungselementverbindung, Unterziehen des resultierenden gemischten Materials einer Hochtemperatursinterung in einer Sauerstoffatmosphäre und Zerkleinern des gesinterten Materials auf einen mittleren Durchmesser von 3,0 µm bis 5. 5 µm, um das W-haltige ternäre Hochnickel-Kathodenmaterial zu erhalten, wobei im Wesentlichen kein W innerhalb der einkristallinen Teilchen vorhanden ist; wobei die kugelförmigen sekundären Teilchen mit W dotiert sind, das eine Molekülformel von LiₐNiₓCo_{y}Mn_{1-x-y} W_{b}M_{c}O₂, 1,00 ≤ a ≤ 1,16, 0,7 <x<1,0<y< 0,3, und 0,002 < b+c < 0,01, und das M eines oder mehrere aus der Gruppe ist, die aus Zr, Mg, Ti, Al, Si, La, Ba, Sr, Nb, Cr, Mo, Ca, Y, In, Sn und F besteht; und das das ternäre Hochnickel-Kathodenmaterial eine spezifische Oberfläche von 0,8 ± 0,3 m²/g aufweist und sowohl kugelförmige sekundäre Teilchen als auch einkristalline Teilchen umfasst.

5. Verfahren nach Anspruch 4, wobei in Schritt (2) das lösliche Wolframsalz eines oder mehrere aus der Gruppe bestehend aus Ammoniummetawolframat (AMT), Phosphorwolframsäure (PTA), Natriumwolframat und Ammoniumparawolframat (APT) umfasst; und das Molverhältnis von Wolfram in dem löslichen Wolframsalz zu einer Summe von Nickel, Kobalt und Mangan in den Vorläufer B (0,00025-0,00550) :1 beträgt:

6. Verfahren nach Anspruch 4, wobei in Schritt (3) die Lithiumquelle eine oder mehrere aus der Gruppe ist, die aus Lithiumcarbonat, Lithiumhydroxid, Lithiumacetat und Lithiumoxalat besteht; und das Molverhältnis von Lithium in der Lithiumquelle zu der Summe der Hauptmetallelemente in dem Vorläufer B, dem Vorläufer A und der M-haltigen Dotierungselementverbindung (0,95 - 1,1):1 beträgt.

7. Verfahren nach Anspruch 4, wobei in Schritt (3) die M-haltige Dotierungselementverbindung ein Oxid des M-Elements ist und das Oxid des M-Elements mindestens eines aus der Gruppe ist, die aus ZrO₂, MgO, TiO₂, Al₂O₃, SiO₂, La₂O₃, BaO, SrO, Nb₂O₅, Cr₂O₃, MoOs, CaO, Y₂O₃, In₂O₃ und SnO₂ besteht.

8. Verfahren nach einem der Ansprüche 4 bis 7, wobei in Schritt (3) die Hochtemperatursinterung 8 bis 18 Stunden lang bei einer Temperatur von 750 bis 980 °C und einer Sauerstoffflussrate von 20 bis 60 L/min durchgeführt wird.

9. Verfahren nach einem der Ansprüche 4 bis 7, wobei in Schritt (3) die Hochtemperatursinterung einmal durchgeführt wird.

10. Verfahren nach Anspruch 4, wobei das Massenverhältnis der kugelförmigen sekundären Teilchen zu den einkristallinen Teilchen in dem W-haltigen ternären Hochnickel-Kathodenmaterial durch das Verhältnis des W-haltigen Vorläufers B zu dem W-freien Vorläufer A in einem Rohmaterial bestimmt wird.

11. Verfahren nach Anspruch 10, wobei ein Massenverhältnis des Vorläufers B zum Vorläufer A (0,05-19): 1 beträgt.

12. Verfahren nach Anspruch 11, wobei ein Massenverhältnis des Vorläufers B zum Vorläufer A (0,4-1,5): 1 beträgt.

13. Verfahren nach Anspruch 4, wobei unter der Voraussetzung, dass der Elementverlust während eines Herstellungsprozesses des W-haltigen ternären Hochnickel-Kathodenmaterials ignoriert wird, das Ni-Co-Mn-Molverhältnis in den kugelförmigen sekundären Teilchen mit dem Ni-Co-Mn-Molverhältnis in den einkristallinen Teilchen übereinstimmt.

## Revendications

1. Matière de cathode ternaire à haute teneur en nickel tungstifère avec une formule chimique de LiₐNiₓCo_{y}Mn_{1-x-y}W_{b}M_{c}O₂, **caractérisée en ce qu'**il comprend des particules secondaires sphériques et des particules monocristallines ; il n'y a presque pas de tungstène dans les particules monocristallines ; les particules secondaires sphériques sont dopées avec tungstène; et dans la formule chimique de LiₐNiₓCo_{y}Mn_{1-x-y}W_{b}M_{c}O₂, 1.00 ≤a≤1.16, 0.7 < x < 1, 0 < y < 0.3, 0.002 < b+c < 0.01, le M est un ou plusieurs du groupe qui se compose de Zr, Mg, Ti, Al, Si, La, Ba, Sr, Nb, Cr, Mo, Ca, Y, In, Sn et F ; et la matière de cathode ternaire à haute teneur en nickel a une surface spécifique de 0.8 ±0.3 m²/g.

2. Matière de cathode ternaire à haute teneur en nickel tungstifère selon la revendication 1, **caractérisée en ce que** les particules secondaires sphériques ont une taille de particule de 2.4 µm~5.5 µm ; les particules monocristallines ont une taille de particule de 1.0 µm~5.5 µm ; et la matière de la cathode ternaire à haute teneur en nickel a un diamètre médian de 3.0 µm~5.5 µm.

3. Matière de cathode ternaire à haute teneur en nickel tungstifère selon la revendication 1 ou 2, **caractérisée en ce qu'**une surface de la matière de la cathode ternaire à haute teneur en nickel est au moins partiellement ou complètement recouverte d'une couche de tungstate de lithium.

4. Procédé de préparation d'une matière de cathode ternaire à haute teneur en nickel tungstifère, qui comprend les étapes de:
(1) mélanger et dissoudre un sel de nickel soluble, un sel de cobalt soluble et un sel de manganèse soluble dans de l'eau désionisée selon un ratio molaire nickel/cobalt/manganèse à l'intérieur d'une formule moléculaire du produit, puis agiter continuellement une solution résultante dans un réacteur et ajouter une solution d'ammoniac et une solution d'hydroxyde de sodium en sorte de former coprécipitation afin de préparer un précurseur A sans tungstène ;
(2) mélanger et dissoudre un sel de nickel soluble, un sel de cobalt soluble et un sel de manganèse soluble dans de l'eau désionisée selon un ratio molaire nickel/cobalt/manganèse à l'intérieur de la formule moléculaire du produit, puis ajouter un sel de tungstène soluble, après dissolution complète du sel de tungstène, transférer une solution résultante à un réacteur ; puis agiter continuellement la solution et ajouter une solution d'ammoniac et une solution d'hydroxyde de sodium en sorte de former coprécipitation afin de préparer un précurseur B tungstifère; et
(3) mélanger complètement le précurseur A, le précurseur B, une source de lithium et un composé qui contient un élément de dopage M, faire frittage à haute température sur une matière mélangée résultante dans une atmosphère d'oxygène, puis piler une matière frittée à un diamètre médian de 3.0 µm à 5.5 µm pour obtenir la matière de cathode ternaire à haute teneur en nickel tungstifère, dans lequel il n'y a presque pas de tungstène dans les particules monocristallines, et les particules secondaires sphériques sont dopées avec tungstène ; et qui a une formule chimique de LiₐNiₓCO_{y}Mn_{1-x-y}W_{b}M_{c}O₂, dans laquelle 1.00 ≤a≤1.16, 0.7 < x < 1, 0 < y < 0.3, 0.002 < b+c < 0.01, et le M est un ou plusieurs du groupe qui se compose de Zr, Mg, Ti, Al, Si, La, Ba, Sr, Nb, Cr, Mo, Ca, Y, In, Sn et F ; et la matière de cathode ternaire à haute teneur en nickel a une surface spécifique de 0.8 ±0.3 m²/g et comprend les particules secondaires sphériques et les particules monocristallines.

5. Procédé de préparation selon la revendication 4, **caractérisé en ce que** dans l'étape (2) le sel de tungstène soluble comprend un ou plusieurs du groupe qui se compose d'un métatungstate d'ammonium (AMT), un acide phosphotungstique (PTA), un tungstate de sodium et un paratungstate d'ammonium (APT) ; et un ratio molaire de le tungstène dans le sel de tungstène soluble contre une somme de nickel, cobalt et manganèse dans le précurseur B est (0.00025-0.00550) : 1.

6. Procédé de préparation selon la revendication 4, **caractérisé en ce que** dans l'étape (3) la source de lithium est une ou plusieurs sources du groupe qui se compose d'un carbonate de lithium, un hydroxyde de lithium, un acétate de lithium et un oxalate de lithium ; et un ratio molaire du lithium dans la source de lithium contre une somme des éléments métalliques principaux dans le précurseur B, le précurseur A et le composé qui contient un élément de dopage M est (0.95-1.1) : 1.

7. Procédé de préparation selon la revendication 4, **caractérisé en ce que** dans l'étape (3) le composé qui contient un élément de dopage M est un oxyde de l'élément M, et l'oxyde de l'élément M est au moins un du groupe qui se compose de ZrO₂, MgO, TiO₂, AhO₃, SiO₂, La₂O₃, BaO, SrO, Nb₂O₅, Cr₂O₃, MoOs, CaO, Y₂O₃, In₂O₃ et SnO₂.

8. Procédé de préparation selon l'une quelconque des revendications 4 à 7, **caractérisé en ce que** dans l'étape (3) le frittage à haute température est effectué pendant 8 h-18 h à une température de 750°C~980°C et un débit d'oxygène de 20 L/min-60 L/min.

9. Procédé de préparation selon l'une quelconque des revendications 4 à 7, **caractérisé en ce que** dans l'étape (3) le frittage à haute température est effectué une fois.

10. Procédé de préparation selon la revendication 4, **caractérisé en ce qu'**un ratio massique des particules secondaires sphériques contre les particules monocristallines dans la matière de cathode ternaire à haute teneur en nickel est déterminé par un ratio du précurseur B tungstifère contre le précurseur A sans tungstène dans une matière brute.

11. Procédé de préparation selon la revendication 10, **caractérisé en ce qu'**un ratio massique du précurseur B contre le précurseur A est (0.05-19) : 1.

12. Procédé de préparation selon la revendication 11, **caractérisé en ce qu'**un ratio massique du précurseur B contre le précurseur A est (0.4-1.5) : 1.

13. Procédé de préparation selon la revendication 4, **caractérisé en ce qu'**en hypothèse d'ignorer une perte d'élément lors d'un processus de préparation de la matière de cathode ternaire à haute teneur en nickel, le ratio molaire Ni/Co/Mn dans les particules secondaires sphériques est cohérent avec le ratio molaire Ni/Co/Mn dans les particules monocristallines.
